**Europäisches Patentamt**

**European Patent Office**

**Office européen des brevets**

(19)

(11) Veröffentlichungsnummer: **0 155 405**
**B1**

(12) # EUROPÄISCHE PATENTSCHRIFT

(45) Veröffentlichungstag der Patentschrift:
**04.11.87**

(21) Anmeldenummer: **84116326.4**

(22) Anmeldetag: **27.12.84**

(51) Int. Cl.⁴: **H 02 K 1/20,** H 02 K 9/10

(54) Einrichtung zur indirekten Gaskühlung der Ständerwicklung und/oder zur direkten Gaskühlung des Ständerblechpaketes dynamoelektrischer Maschinen, vorzugsweise für gasgekühlte Turbogeneratoren.

(30) Priorität: **21.03.84 DE 3410392**
**04.12.84 DE 3444189**

(43) Veröffentlichungstag der Anmeldung:
**25.09.85 Patentblatt 85/39**

(45) Bekanntmachung des Hinweises auf die Patenterteilung:
**04.11.87 Patentblatt 87/45**

(84) Benannte Vertragsstaaten:
**AT CH DE LI**

(56) Entgegenhaltungen:
**DE-A-2 345 810**
**DE-C-412 513**
**DE-C-467 201**
**DE-C-590 588**
**FR-A-497 839**
**FR-A-717 252**
**FR-A-782 561**
**GB-A-22 383**
**US-A-2 615 938**
**US-A-2 615 938**

(73) Patentinhaber: **Siemens Aktiengesellschaft Berlin und München, Wittelsbacherplatz 2, D-8000 München 2 (DE)**

(72) Erfinder: **Besselmann, Ernst, Dipl. -Ing., Hünxer Feld 5, D-4224 Hünxe (DE)**

EP 0 155 405 B1

## Beschreibung

Die Erfindung bezieht sich auf eine Einrichtung zur indirekten Gaskühlung der Ständerwicklung und/oder zur direkten Gaskühlung des Ständerblechpaketes dynamoelektrischer Maschinen, vorzugsweise für gasgekühlte Turbogeneratoren, gemäß Oberbegriff des Anspruchs 1.

Die Kühlung in den Elektromaschinenständen mit einer Einrichtung gemäß Gattungsbegriff wird in der Regel wie folgt ausgeführt.

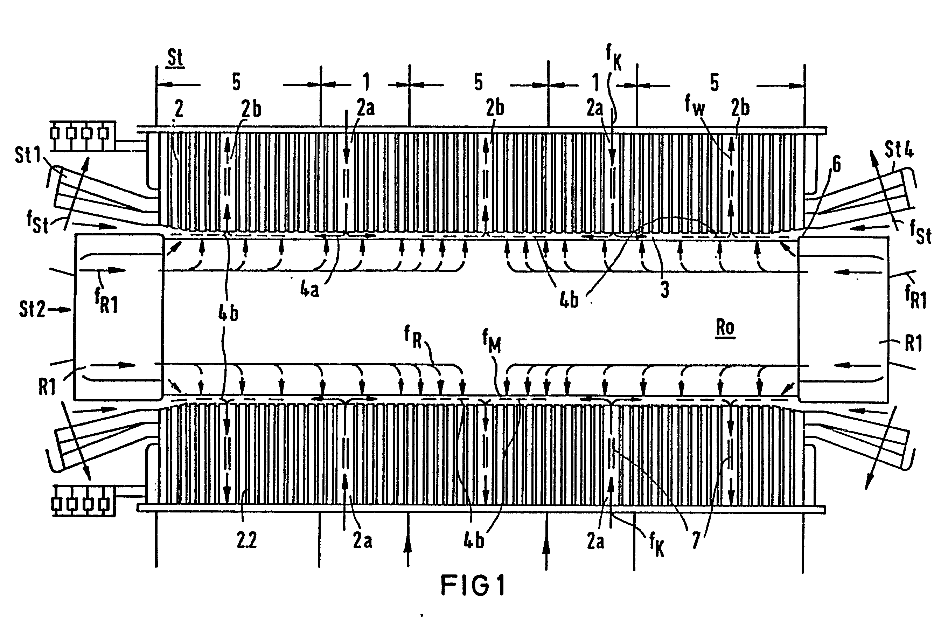

Aus den Kaltgaskammern strömt Kaltgas durch die radialen Kaltgasschlitze des Blechpaketes zum Luftspalt hin, strömt axial zum Abgasbereich und dann durch radiale Warmgasschlitze zum Blechpaketrücken in die Warmgas- bzw. Abgaskammern. Das Abgasvolumen zu den Abgaskammern wird durch Gaszuführungen oder -abführungen am Luftspalteintritt (Stirnseiten) und durch die Kühlgase des Läufers beeinflußt. Die Radialschlitze, ob nun radiale Kaltgas- oder Warmgasschlitze, werden durch Distanzstege in der Schichtung des Blechpaketes gebildet, so daß das Blechpaket in viele kompakte Teilblechpakete unterteilt ist. Diese Bauform gilt insbesondere bei indirekt luftgekühlten Turbogeneratoren. Diese bekannte Bauform hat verschiedene Nachteile, die weiter unten anhand der Abbildungen Fig. 1 bis Fig. 4 noch näher erläutert und hier deshalb lediglich schlagwortartig zusammemgefaßt werden:

- zu große Wärmetauscherflächen im Joch bei im Verhältnis dazu zu geringer Wärmequellendichte und zu kleine Wärmetauscherflächen im Zahnbereich bei im Verhältnis dazu zu hoher Wärmequellendichte;
- Spaltquerschnitte für das Kühlgas in der Jochmitte mehrfach so groß wie in Zahnmitte, damit schwach genutzter Spalt im Joch, der zu größeren Blechpaket- und Gehäusedurchmessern führt;
- Wärmeabfuhr aus den Teilpaketen über einen axialen Wärmefluß, der infolge der Schichtung einen etwa um den Faktor 15 höheren Wärmewiderstand als derjenige in radialer oder in Umfangsrichtung zu überwinden hat;
- über 70 % der geraden Wicklungslänge des Ständers erfolgt eine Kühlung mit den hohen Wärmewiderständen und den geringen Wärmetauscherflächen;
- das zu den Abgaskammern strömende Kühlgas hat nur ein wenig wirksames Temperaturgefälle zu den Wärmetauscherflächen.

Der Erfindung liegt die Aufgabe zugrunde, eine gattungsgemäße Einrichtung zu schaffen, welche unter Vermeidung der geschilderten Nachteile einen verbesserten Wärmetausch von den Heißstellen des Ständerblechpaketes zum Kühlgas und damit eine bessere Ausnutzung der Kühlgasströme erbringt. Daraus folgend soll die Maschinenleistung bei gegebener Baugröße gesteigert werden können, so daß insbesondere mit indirekt luftgekühlten Turbogeneratoren in Leistungsbereiche vorgedrungen werden kann, die bisher nur wasserstoffgekühlten Maschinen vorbehalten waren.

Erfindungsgemäß wird die gestellte Aufgabe bei einer gattungsgemäßen Einrichtung durch die im Kennzeichen des Anspruchs 1 angegebenen Merkmale gelöst. Vorteilhafte Weiterbildungen sind in den Unteransprüchen 2 bis 13 angegeben.

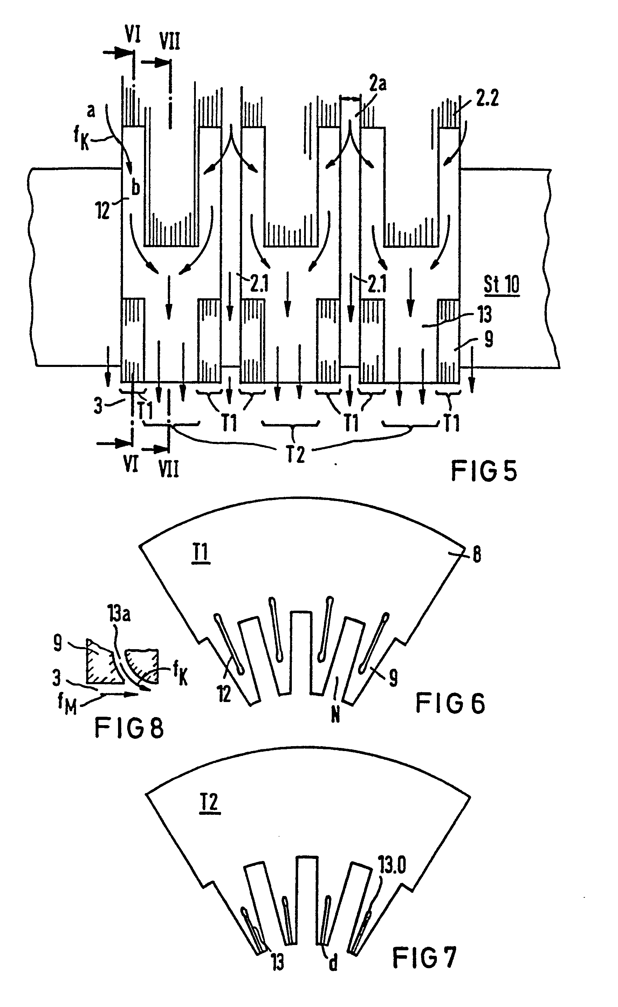

Die mit der Erfindung erzielbaren Vorteile gehen aus der nachfolgenden Figurenbeschreibung hervor, in welcher anhand der Abb. Fig. 1 bis Fig. 4 zunächst der Stand der Technik und daran anschließend anhand der Figuren 5 bis 14 mehrere Ausführungsbeispiele der Erfindung erläutert werden.

In der Zeichnung zeigt in schematischer, vereinfachter Darstellung unter Fortlassung der für das Verständnis der Erfindung nicht erforderlichen Teile:

Fig. 1 eine konventionelle Kühleinrichtung für einen Turbogeneratorständer im Axialschnitt;

Fig. 2 eine Einzelheit des Zahnbereiches aus Fig. 1;

Fig. 3 eine Draufsicht auf ein Blechsegment des Ständerblechpaketes zur Definition des Joch- und Zahnbereiches;

Fig. 4 einen Ständer-Axialbereich der Abgaskammer mit angrenzenden Kaltgaskammern im Ausschnitt.

In den Fig. 5 bis 14 sind mehrere Ausführungsbeispiele der Erfindung dargestellt, und zwar in

Fig. 5 in einem Axialschnitt im Ausschnitts-Detail den Teil eines ersten Ausführungsbeispiels nach der Erfindung, der die Zahninnenkühlung des Kaltgaskammernbereiches betrifft;

Fig. 6 den Schnitt VI-VI aus Fig. 5;

Fig. 7 den Schnitt VII-VII aus Fig. 5, wobei in Fig. 6 und 7 lediglich Umfangsteilbereiche dargestellt sind,

Fig. 8 im Ausschnitt eine diffusorartige und gekrümmte Kühlkanalmündung eines Teilpaketes (Variante zum 1. Ausführungsbeispiel);

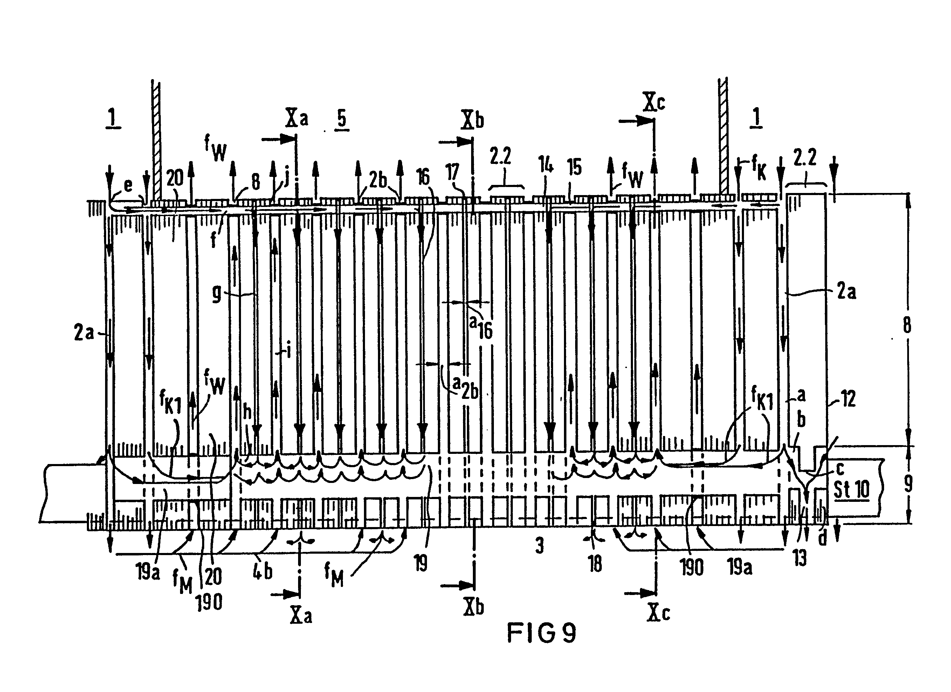

Fig. 9 das 1. Ausführungsbeispiel, vervollständigt durch ein im Axialschnitt dargestelltes im Axialbereich einer Warmgaskammer angeordnetes Teilkühlsystem für das betreffende Teilblechpaket, so daß ein überlagertes Warmgas-Kaltgas-Kühlsystem gebildet ist;

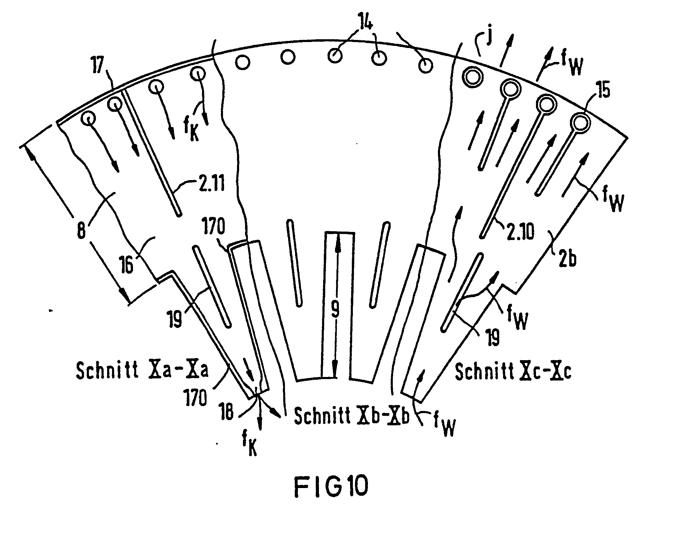

Fig. 10 in drei achsnormalen Teilschnitten Xa-Xa, Xb-Xb und Xc-Xc den Gegenstand nach Fig. 9 auf einem Teilumfang des Ständerblechpaketes;

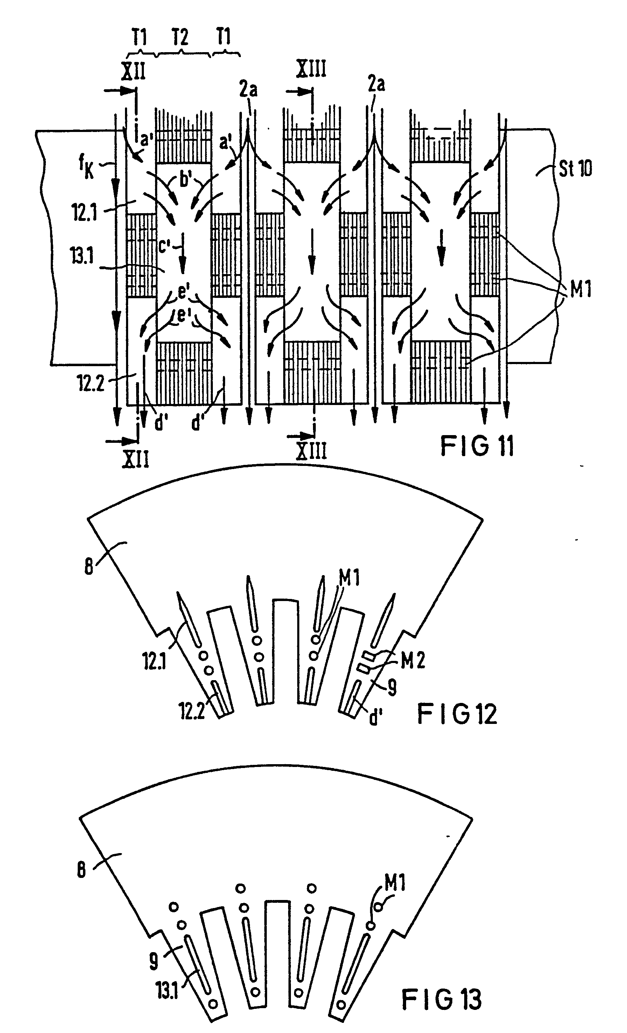

Fig. 11 ein zweites Ausführungsbeispiel für die Zahninnenkühlung in entsprechender Darstellung wie Fig. 5;

Fig. 12 den Schnitt XII-XII aus Fig. 11;

Fig. 13 den Schnitt XIII-XIII aus Fig. 11;

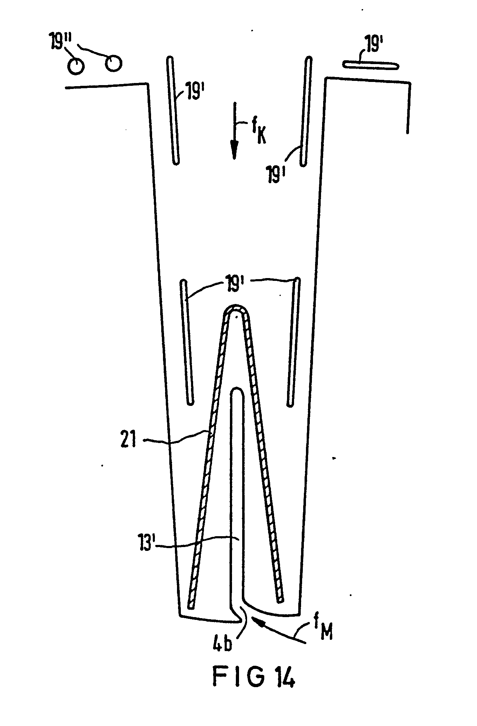

Fig. 14 in der Einzelheit eines Zahnbereiches ein weiteres Ausführungsbeispiel zur Trennung der Kaltgas- von den Warmgasströmen für eine Ausführung nach Fig. 9.

Die folgenden Abschnitte I und II der Figurenbeschreibung sind zur besseren Übersicht mit Kapitelüberschriften versehen.

I

## Stand der Technik (Fig. 1 bis 4)

Im folgenden wird ein übliches System zur Kühlung von Elektromaschinenständern zunächst anhand von Fig. 1 beschrieben. Die darin verwendeten Bezugzeichen bedeuten:

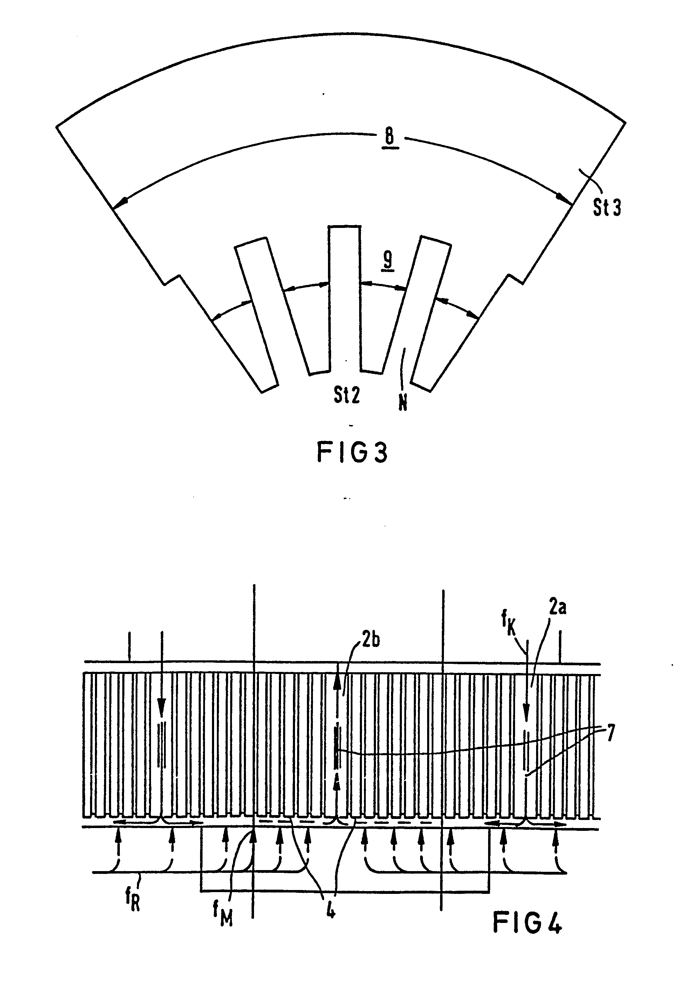

1 Kaltgaskammer
2 Blechpaket mit Radialschlitzen
3 Luftspalt
4 Warmgasbereich (Fig. 4)
5 Warmgaskammer
6 Gasführung am Luftspalteintritt
7 Wärmetauscherflächen der Bleche für Kühlgas
St Stator bzw. Ständer des Turbogenerators
Ro Rotor bzw. Läufer des Turbogenerators
St1 Ständerwicklung
R1 Wickelkopfkappen des Rotors Ro
2a Radialschlitze für Kaltgas
2b Radialschlitze für Abgas
4a erste Luftspalträume
4b zweite Luftspalträume
St2 Ständerbohrung
N Nuten

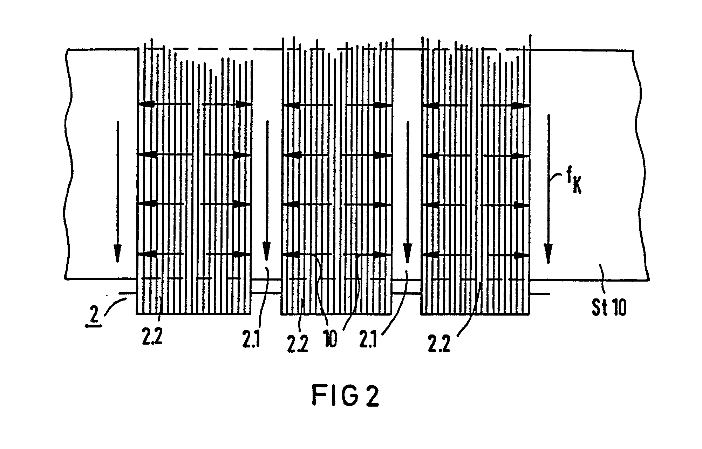

Die in den Fig. 1 bis 5 dargestellte Einrichtung dient zur indirekten Gaskühling der Ständerwicklung St1 und zugleich zur direkten Gaskühlung des Ständerblechpaketes 22 der in Fig. 1 schematisch dargestellten dynamoelektrischen Maschine, bei der es sich um einen im Ständer St und Läufer luftgekühlten Turbogenerator handelt. Die Erfindung umfaßt indessen auch allgemein gasgekühlte, z. B. $H_2$-ge-kühlte dynamoelektrische Maschinen, ebenso solche, deren Ständerwicklung direkt mit Gas oder Flüssigkeit gekühlt ist. In Nuten N (siehe Fig. 3) am Innenumfang des im wesentlichen hohlzylindrischen Ständerblechpaketes 2 sind Wicklungsstäbe St10 (siehe Fig. 2) der Ständerwicklung St1 eingelegt. Diese Wicklungsstäbe sind in üblicher Weise hochspannungsisoliert. Der Rotor Ro mit Rotorwicklung (nicht näher dargestellt) ist koaxial innerhalb der Bohrung St2 des Ständerblechpaketes 2 mit ringförmigem Luftspalt 3, d. h. zentrisch zum Innenumfang der Ständerbohrung St2, umlaufend gelagert (die Wellenlagerung ist zur Vereinfachung weggelassen).

Zum besseren Verständnis der folgenden Ausführung sei zunächst auf die in den Figuren 2 bis 4 noch ergänzend verwendeten Bezugzeichen wie folgt hingewiesen:
Fig. 2:
2.1 Radialschlitz-Distanzstege
2.2 kompakte Teilblechpakete
St10 einzelner Stab der aus einer Stabvielzahl bestehenden Ständerwicklung St1
10 Richtung des axialen Wärmeflusses
Fig. 3 und Fig. 4

St3 Blechsegmente des Ständerblechpaketes 2
8 Flächen im Jochbereich der Blechsegmente St3
9 Flächen im Zahnbereich
$f_K$ Strömungspfeile für Kaltgas
$f_W$ Strömungspfeile für Warmgas
$f_R$ Strömungspfeile für aus dem Rotor Ro austretendes Kühlgas
$f_M$ Strömungspfeile für aus Kalt- und Rotor-Abgas gemischtes Mischgas im Luftspalt 3.

Man erkennt aus Fig. 1 bis Fig. 4, daß zwischen axial aneinandergereihten Teilblechpaketen 2.2 des Ständerblechpaketes 2 Distanzftege 2.1 unter Bildung von Radialschlitzen 2a, 2b für Kühlgas eingefügt sind und diese Radialschlitze die ringförmigen Luftspalträume 4a, 4b am Innenumfang des Ständerblechpaketes 2 mit Kammerräumen 1 bzw. 5 am Außenumfang des Ständerblechpaketes verbinden. Bei den Kammerräumen handelt es sich entweder um Kaltgaskammern 1, von denen das Kaltgas gemäß Strömungspfeilen $f_K$ radial einwärts durch radiale Kaltgasschlitze 2a in zugehörige erste Luftspalträume 4a gedrückt wird. Andererseits handelt es sich bei den Kammerräumen um Warmgaskammern 5, in welche aufgewärmtes Kühlgas gemäß Pfeilen $f_W$ aus zweiten Luftspalträumen 4b über radiale Warmgasschlitze 2b radial auswärts gerichtet einströmt. Das Abgasvolumen zu den Warmgaskammern 5 wird durch Gaszuführungen oder -abführungen am Luftspalteintritt 6 (Stirnseiten) und durch die Kühlgase $f_R$ des Läufers Ro beeinflußt. Wie erwähnt, werden die radialen Kühlschlitze 2a, 2b durch Distanzstege 2.1 im Zuge der Schichtung des Blechpaketes 2 gebildet, so daß das Blechpaket in viele kompakte Teilblechpakete 2.2 unterteilt ist. Kühlgas-Gebläsemittel und -Leiteinrichtungen an mindestens einem Maschinenende, vorzugsweise an beiden Maschinenenden, sind nicht dargestellt; durch die Strömungspfeile $f_{R1}$ der unterhalb der Rotorwicklungskappen R1 von beiden Enden her eintretenden Kühlgasströmung und durch die Strömungspfeile $f_{St}$ der an den Wickelköpfen St4 vorbei in das Ständergehäuse und in den Luftspalt 3 von beiden Maschinenenden her einströmenden Kühlgasströmung ist jedoch angedeutet, daß entsprechende Lüfter und Leiteinrichtungen vorzusehen sind, welche das über nicht dargestellte Wärmetauscher gekühlte Kühlgas als Kaltgas den Kaltgaskammern 1 zuleiten und das aufgewärmte Kühlgas aus den Warmgaskammern 5 wieder absaugen.

Die Nachteile dieses bekannten Kühlsystems:
1. Die Wärmetauscherflächen sind im Joch 8 - vergleiche Fig. 3 - bei geringer Wärmequellendichte groß.
2. Die Wärmetauscherflächen sind im Zahnbereich 9 bei hoher Wärmequellendichte klein.
3. Die Spaltquerschnitte für das Kühlgas sind in der Jochmitte fast dreimal so groß wie in der Zahnmitte. Der schwach genutzte Spalt im Joch führt aber zu größeren Blechpaket- und Gehäusedurchmessern.

4. Die Wärmeabfuhr aus den Teilpaketen geschieht über einen axialen Wärmefluß 10, der infolge der Schichtung einen Wärmewiderstand zu überwinden hat, der um den Faktor 15 höher ist als in radialer Richtung oder Umfangsrichtung.

5. Da die Wicklungen im Blechpaketbereich zu über 70 % in den Teilblechpaketen liegen, wird für über 70 % der geraden Wicklungslänge nur eine Kühlung mit den hohen Wärmewiderständen und den geringen Wärmetauscherflächen entsprechend 4. und 2. wirksam.

6. Das Kühlgas, das zu den Abgasbereichen 5 strömt, hat nur ein wenig wirksames Temperaturgefälle zu den Wärmetauscherflächen 7 (siehe Fig. 4). Gründe dafür:

- Zu hohe Kühlgastemperatur durch die Aufnahme folgender Verluste: Lüfterverluste, Wickelkopfverluste, Blechpaket- und Wicklungsverluste der Kaltgaskammernbereiche und die Gasreibungsverluste im Luftspalt. Hinzu kommen die heißen Kühlgase des Läufers, die im Luftspalt durch Gasreibung zusätzlich aufgewärmt werden.

- Verlorenes Wärmegefälle vom Wicklungskupfer zu den Wärmetauscherflächen infolge der Wärmewiderstände entsprechen vorstehender Ziffer 4.

- Die Kühlwirkung kann nur in engen Grenzen dadurch verbessert werden, daß die vorhergehende Aufwärmung durch noch größere Gasmengen reduziert wird: Gasmengenprobleme, höhere Lüfterverluste, teurere Rückkühlung.

## II

**Beschreibung der Zahninnenkühlung und des überlagerten Kaltgaskreises in den Warmgaskammern gemäß der Erfindung**

Im folgenden wird ein wirksames Kühlsystem für indirekt gekühlte Ständerwicklungen mit einer Zahninnenkühlung und einem überlagerten Kaltgaskreis in den Warmgaskammern beschrieben. Zunächst der

a) Kaltgaskammernbereich (Fig. 5 bis 8)

Teilblechpakete 2.2 können dicker geschichtet werden, so daß weniger Radialschlitze 2.1 entstehen. An den Radialschlitzen liegen Bleche mit ersten gestanzten Langlöchern 12 vom Jochbereich bis in den Zahn hinein an. Die axial anschließenden Bleche werden mit zweiten gestanzten Langlöchern 13 in Richtung Zahnkopf versehen, die mit den vorhergehenden Langlöchern 12 überlappen. Durch diese Art der versetzt gestanzten Langlöcher wird ein Kühlgasweg - axial und radial - durch die Zahnmitte bis hin zum Luftspalt geöffnet mit den Kanalabschnitten a, b, c, d - siehe Fig. 5 bis 7 -; es ergeben sich damit Teilpakete T1 mit dem Stanzschnitt gemäß 12 und Teilpakete T2 mit dem Stanzschnitt gemäß 13.

Vorteile der Zahninnenkühlung

1. Die Wärmetauscherflächen im Joch werden der geringeren Wärmequellendichte angepaßt.

2. Die Wärmetauscherflächen im Zahnbereich sind bei hoher Wärmequellendichte recht groß.

3. Die Spaltquerschnitte für das Kühlgas sind im Verhältnis Joch zu Zahnbereich besser angepaßt.

4. Die Wärmeabfuhr aus der Wicklung innerhalb der Teilblechpakete kann auf kurzem Weg in Blechtafelrichtung zu den Langlöchern als Kühlgaswege im Zahn erfolgen. - Geringer Wärmewiderstand, ca. 90 % weniger -.

5. Für die Wärmeabfuhr im Zahnbereich stehen große Wärmetauscherflächen zur Verfügung.

6. Der Austritt aus den Zahnschlitzen zum Luftspalt kann strömungstechnisch günstig gestaltet werden, siehe diffusorartige Schlitzgestaltung gemäß Fig. 8, wonach die Mündung 13a des Kühlgasauslaßschlitzes (13) diffusorartig erweitert ist.

b) Warmgaskammernbereich

Siehe Fig. 9 und 10 mit den Teilschnitten Xa-Xa, Xb-Xb und Xc-Xc aus Fig. 9.

In die Peripherie des Joches 8 im gesamten Warmgas- bzw. Abgaskammerbereich 5 werden zu den Kaltgaskammernbereichen 1 hin Überströmkanäle 14 eingestanzt. Hierdurch kann dem gesamten Warmgaskammernbereich 5 Kaltgas aus den Kaltgaskammern zur Verfügung gestellt werden. Diese Kanäle werden zu den radialen Warmgasschlitzen 2b hin abgedichtet, z. B. durch geeignete Distanzstege 15 zusätzlich zu den radial verlaufenden Distanzstegen 2.10. Die Teilblechpakete zwischen den Warmgasschlitzen 2b werden mit Distanzstegen 2.11 und 17 für je einen zusätzlichen radialen Kaltgasschlitz 16 in Teilpakete axial unterteilt, wobei der Kaltgasschlitz 16 von den Überströmkanälen 14 her versorgt wird und in seiner Weite $a_{16}$ nur ca. 1/5 - 1/2, insb. 1/3 der Weite $a_{2b}$ der Warmgasschlitze 2b beträgt. Diese Kaltgasschlitze 16 müssen zum Rücken hin abgedichtet sein, z. B. durch die tangential verlaufenden Distanzstege 17, die zusätzlich zu den radial verlaufenden Distanzstegen 2.11 vorgesehen sind. Am Zahnkopf kann ein durch distanzierende Stege 170 freigelassener geringer Querschnitt 18 geöffnet bleiben, damit die gesamte Zahnfläche zur Kühlung genutzt werden kann, und Fremdpartikel wieder zum Luftspalt ausgeworfen werden können. Die Zähne im gesamten Warmgasbereich werden mit in sich geschlossenen Zahnschlitzen in Form gestanzter Langlöcher 19 versehen, so daß das Kühlgas gemäß Pfeilen $f_K$ von den Überströmkanälen 14 her durch den radialen Kaltgasschlitz 16 und die Zahnkühlschlitze gemäß Strömungspfeilen $f_M$, $f_W$ zu den radialen Abgasschlitzen 2b und damit zu den Warmgaskammern 5 hin abströmen kann, siehe in Strömungsrichtung aufeinanderfolgende Kanalabschnitte e, f, g, h, i, j. (Fig.9) - Fig.10 zeigt noch, daß der Querschnitt 18 als Drosselstelle ausgebildet sein kann zwecks definierter Mengensteuerung.

Zur Entlastung der Überströmkanäle können die ersten Zahnpakete 20 in den Warmgaskammern 5, die an die Kaltgaskammern 1 anschließen, direkt von den radialen Kaltgasschlitzen 2a aus den Kaltgaskammern 1 mit Kaltgas versorgt werden, siehe Strömungspfeile $f_{K1}$ und zahninterne Verbindungskanäle 19a. Die Abdichthülsen 190 dichten die zahninternen Verbindungskanäle 19a zum ersten Warmgaskanal 2b an den Enden des Bereiches 5 ab.

Vorteile des überlagerten Kaltgaskreises:

1. Der überlagerte Kühlkreislauf zielt genau auf den Engpaß der Kühlung, nämlich die Abführung der Kurzschlußverluste im Warmgaskammernbereich 4 der Ständerwicklung St1.

2. Die Gasmenge kann für die Verluste ausgelegt werden, die in diesem Bereich zusätzlich abgeführt werden sollen. Dabei wird der überlagerte Kühlkreislauf, außer von den Kurzschlußverlusten, nur noch von den Blechpaketverlusten beeinflußt.

(Beträgt die Länge einer Warmgaskammer nur ca. 15 % einer Stablänge, und sollen zusätzlich zum konventionellen System 50 % Verluste abgeführt werden, so kann die Berechnung des überlagerten Kaltgaskreises auf 7,5 % der Kurzschlußverluste unter zusätzlicher Berücksichtigung der Blechpaketverluste beschränkt bleiben).

3. Das Kaltgas in Verbindung mit den zur Gasmenge großen Wärmetauscherflächen und den geringen Wärmewiderständen von den Wärmequellen zu den Wärmetauscherflächen hin ergibt eine sehr hohe Gasaufwärmung und damit eine extrem günstige Wärmeabfuhr.

4. Der überlagerte Kühlkreislauf kann auf die Warmgaskammer(n) 5 beschränkt bleiben, die im mittleren Maschinenbereich die höchste(n) Aufwärmung(en) hat (haben). Abgasbereiche an den Maschinenenden werden über den Luftspalt mit Kaltgas versorgt.

5. In Verbindung mit einer Saugbelüftung können die Abgasbereiche minimiert und das Blechpaket dichter geschichtet werden (geringe Gasmenge, hohe Aufwärmung durch die Zahninnenkülung, direkte Abführung durch den Luftspalt).

c) Variationen

Die Zahninnenkühlung entsprechend Fig. 5 bis 8 und der dem Warmgasbereich überlagerte Kaltgaskreis entsprechend Fig. 9 und Fig. 10 können sinngemäß variiert und kombiniert werden.

1. Beispiel für die Variation der Zahninnenkühlung Fig. 11 bis 13

Fig. 11 Die Radialerstreckung des Kanalabschnitts bzw. Strömungsbereiches c' ist größer als bei c von Fig. 5; im Anschluß an c' Aufgabelung gemäß e' auf zwei Radialschlitze, siehe d', die axial hintereinanderliegen. In diesem Ausführungsbeispiel sind in Fig. 111 bis 13 ferner Lochstanzungen M1 bzw. Langlochstanzungen M2, letztere in Richtung des Wärmeflusses angedeutet. Im Verlängerungsbereich der Langlöcher 12.1, 12.2, 13.1 angeordnet, können durch diese Stanzungen M1, M2 die magnetischen Widerstände angepaßt und axiale Ausgleichsflüsse verringert oder verhindert werden.

Fig. 12 Schnitt XII-XII aus Fig. 11 mit Stanzschnitten 12.1, 12.2;

Fig. 13 Schnitt XIII-XIII aus Fig. 11 mit Stanzschnitt 13.1.

2. Kombination der Kühlsysteme für den Warmgaskammernbereich Fig. 9, 10

Die Zähne in Teilblechpaket 2.2 können beliebige Kühlgaswege für den Kühlkreis der Zahninnenkühlung mit der Öffnung zum Luftspalt (vgl. Fig. 5 bis 7) und für den dem Warmgasbereich überlagerten Kaltgasbereich (vgl. Fig. 9 und 10) aufnehmen. Dazu ist mit Vorteil eine Trennung beider Kühlsysteme durch einen V-förmig gebogenen Distanzsteg 21 in dem zusätzlichen radialen Kaltgasschlitz 16 erforderlich, siehe Fig. 14, wo mit 19' über den Zahn- und Nutengrundbereich verteilte gestanzte Langlöcher und mit 19'' eine Variation in Form von Lochstanzungen bezeichnet sind, ferner mit 13' der vom Luftspaltraum 4b her mit Mischgas $f_M$ beaufschlagte Zahnschlitz. Die Ausführung nach Fig. 14 kann als doppelt wirkend angesprochen werden, indem sie Kühlpfade, die in Fig. 10 im Schnitt Xa-Xa (links) und im Schnitt Xc-Xc (rechts) dargestellt sind, innerhalb des zusätzlichen radialen Kühlschlitzes 16' vereinigt.

3. Glättung der Innenbohrung Das System ermöglicht den Verzicht auf die Zahnkopfkühlung im Luftspalt. Die Streukanäle zwischen den Ständerzahnköpfen innerhalb der radialen Kühlgasschlitze 2a, 2b können ausgefüllt und hier entstehende Verwirbelungsverluste verringert werden.

**Patentansprüche**

1. Einrichtung zur indirekten Gaskühlung der Ständerwicklung und/oder zur direkten Gaskühlung des Ständerblechpaketes dynamoelektrischer Maschinen, vorzugsweise für gasgekühlte Turbogeneratoren

- mit einem im wesentlichen hohlzylindrischen Ständerblechpaket (St);

- mit in Nuten (N) am Innenumfang des Ständerblechpaketes (2) eingelegten Wicklungsstäben (St10) der Ständerwicklung (St1);

- und mit einem Rotor (Ro) mit Rotorwicklung, der koaxial innerhalb der Bohrung (St2) des Ständerblechpaketes (2) mit Luftspalt (3) zu dessen Innenumfang umlaufend gelagert ist;

- wobei zwischen axial aneinandergereihten Teilblechpaketen (2.2) der Ständerblechpaketes (2) Distanzstege (2.1) unter Bildung von Radialschlitzen (2a, 2b) für Kühlgas eingefügt sind und die Radialschlitze die ringförmigen Luftspalträume am Innenumfang des Ständerblechpaketes (St) mit Kammerräumen (1.5) am Außenumfang des Ständerblechpaketes verbinden;

- welche Kammerräume Kaltgaskammern (1) umfassen, von denen das Kaltgas ($f_k$) radial einwärts durch radiale Kaltgasschlitze (2a) in zugehörige erste Luftspalträume (4a) gedrückt wird, und Warmgaskammern (5) umfassen, in welche aufgewärmtes Kühlgas ($f_w$) aus zweiten Luftspalträumen (4b) über radiale Warmgasschlitze (2b) radial auswärts gerichtet einströmt;

- wobei Kühlgas-Gebläsemittel und -Leiteinrichtungen an mindestens einem Maschinenende, vorzugsweise an beiden Maschinenenden, vorgesehen sind, welche das über Wärmetauscher gekühlt, Kühlgas als Kaltgas den Kaltgaskammern zuleiten und das aufgewärmte Kühlgas aus den Warmgaskammern wieder absaugen,
    dadurch gekennzeichnet,

- daß das Ständerblechpaket (2) innerhalb seiner Teilblechpakete (2.2) mit zahninternen Kühlkanälen (a, b, c, d; a', b', c' d'; h) versehen ist, welche mit radialen Kühlgasschlitzen (2a, 2b) kommunizieren; und

- daß die Bleche eines den radialen Kaltgasschlitzen (2a) am nächsten liegenden Teilpaketes (T1) des jeweiligen Teilblechpaketes (2.2) mit ersten gestanzten Langlöchern (12; 12.1) versehen sind, welche sich vom Jochbereich (8) bis in den Zahnbereich (9) hinein erstrecken, und daß die Bleche eines axial daran anschließenden Teilpaketes (T2) mit zweiten gestanzten Langlöchern (13; 13.1) versehen sind, welche sich mit den ersten Langlöchern (12 bzw. 12.1) zumindest in radialer Richtung überlappen und sich weiter in den Zahnbereich (9) erstrecken sowie zumindest mittelbar mit in den Luftspalt (3) mündenden Kühlgasauslaßschlitzen (d; d') des Zahnkopfes kommunizieren.

2. Einrichtung nach Anspruch 1, dadurch gekennzeichnet, daß die zweiten gestanzten Langlöcher (13) sich bis in den Zahnkopf erstrecken und selbst die Kühlgasauslaß-Schlitze (d, 13a; Fig. 5 und Fig. 7) aufweisen.

3. Einrichtung nach Anspruch 1, wobei die zweiten Langlöcher mittelbar in den Ringspalt münden, dadurch gekennzeichnet, daß in Blechen des Teilpaketes (T1), welche axial versetzt zu dem zweite gestanzte Langlöcher (13.1) aufweisenden Teilpaket (T2) angeordnet sind, dritte gestanzte Langlöcher (12.2) vorgesehen sind, welche sich mit den zweiten Langlöchern (13.1) zumindest radial überlappen und mit Kühlgasauslaßschlitzen (d',- Fig. 11 bis 13) in den Luftspalt (3) münden.

4. Einrichtung nach einem der Ansprüche 1 bis 3, wobei die Gasströmung im betreffenden Luftspaltraum und im Mündungsbereich der Kühlgasauslaßschlitze axiale Strömungskomponenten aufweist, dadurch gekennzeichnet, daß der Kühlgasauslaßschlitze (13) aus der radialen in die axiale Richtung abgebogen oder gekrümmt verläuft, so daß das aus der Mündung (13a) des Kühlgasauslaßschlitzes (d) strömende Kühlgas ($f_K$) mit der Gasströmung ($f_M$ - Fig. 8) des betreffenden Luftspaltraumes gleichgerichtet ist.

5. Einrichtung nach Anspruch 4, dadurch gekennzeichnet, daß die Mündung (13a) des Kühlgasauslaßschlitzes (13) diffusorartig erweitert ist.

6. Einrichtung nach einem der Ansprüche 1 bis 5, dadurch gekennzeichnet, daß im Axialbereich der Warmgaskammern (5) und im Rückenbereich der Teilblechpakete axiale Überströmkanäle (14) angeordnet sind, welche im Bereich ihrer Durchdringungen durch die radialen Warmgasschlitze (2b) gegen letztere abgedichtet sind und von welchen über die Teillänge des Blechteilpaketes (2.2) verteilte radiale Zusatzschlitze (16) abzweigen, wobei die radialen Zusatzschlitze jeweilsvorzugsweise mittig - zwischen zwei aufeinanderfolgenden radialen Warmgasschlitzen (2b) angeordnet sind, eine geringere Schlitzweite ($a_{16}$) als diese aufweisen und im Zahnbereich (9) und ggf. angrenzenden Jochbereich (8) in die zahninternen Kühlkanäle (h, 19) münden.

7. Einrichtung nach Anspruch 6, dadurch gekennzeichnet, daß die radialen Zusatzschlitze (16) ihre eigenen Zusatz-Kühlgasauslaßschlitze (18) aufweisen, derart, daß die durch die radialen Zusatzschlitze (16) radial einwärts strömenden Kaltgaszweigmengen ($f_k$) sich auf zwei Teilströme aufteilen: einen durch die zahninternen Kühlkanäle (h, 19) zunächst axial und dann nach axial-radialer Umlenkung radial auswärts durch die radialen Warmgasschlitze (2b) strömenden größeren ersten Teilstrom und in einen durch die Zusatz-Kühlgasauslaßschlitze (18) direkt in den betreffenden Luftspaltraum (46) einströmenden kleineren zweiten Teilstrom.

8. Einrichtung nach Anspruch 6 oder 7, dadurch gekennzeichnet, daß die Zusatzschlitze (16) auf der Rückenseite des Blechpaketes zur Warmgaskammer (5) abgedichtet sind, z. B. durch Distanzstege (17).

9. Einrichtung nach einem der Ansprüche 6 bis 8, dadurch gekennzeichnet, daß zur Entlastung der axialen Überströmkanäle (14) die im äußeren Axialbereich der Warmgaskammern (5) angeordneten ersten Zahnpakete (20), die an den Axialbereich der Kaltgaskammern (1) anschließen, über zahninterne Verbindungskanäle (19a) als Kaltgas-Bypaß mit den axial benachbarten radialen Kaltgasschlitze (2a -Fig. 9) kommunizieren und von diesen direkt mit Kaltgas versorgt werden.

10. Einrichtung nach einem der Ansprüche 1 bis 7 dadurch gekennzeichnet, daß zusätzliche Lochstanzungen (M1) und/oder Langlochstanzungen (M2) in Blechbereichen, die in der Verlängerung und benachbart zu wenigstens einem der ersten bis dritten Langlöcher (12, 13; 12.1,13.1, 12.2) liegen, zur Verringerung oder Verhinderung von durch die letzterwähnten Langlöcher bedingten axialen Ausgleichsflüssen angeordnet sind.

11. Einrichtung nach einam der Ansprüche 1 bis 10, dadurch gekennzeichnet, daß der innerhalb der radialen Kühlgasschlitze (2a, 2b) gelegene Raum zwischen den Zahnköpfen zur Glättung des Luftspaltes ausgefüllt wird.

12. Einrichtung nach einem der Ansprüche 1 bis 9, gekennzeichnet durch Luft als Kühlgas.

13. Einrichtung nach Anspruch 1 bis 9, gekennzeichnet durch $H_2$ als Kühlgas.

## Claims

1. An arrangement for the indirect gas cooling of the stator winding and/or for the direct gas cooling of the stator laminated core of a dynamo-electrical machine, especially for gas-cooled turbo-generators, comprising

- a stator laminated stack (St) which is basically of hollow-cylindrical form;
- winding rods (St10) of the stator winding (St1) which are inserted into grooves (N) at the inner periphery of the stator laminated stack (2);
- and a rotor (Ro) which has a rotor winding and is rotatably supported coaxially within the bore (St2) of the stator laminated stack (2) with an air gap (3) to its inner periphery of the bore;
- wherein between sub-laminated stacks (2.2) of the stator laminated stack (2), which are aligned axially one beside another, spacing bridges (2.1) are inserted so as to form radial slots (2a, 2b) for cooling gas, and wherein the radial slots connect the annular air gap spaces at the inner periphery of the stator laminated stack (St) to chambers (1.5) at the outer periphery of the stator laminated stack;
- which chambers comprise cold gas chambers (1) from which the cold gas ($f_k$) is compressed radially inwards through radial cold gas slots (2a) into associated first air gap spaces (4a), and warm gas chambers (5) into which heated cooling gas ($f_w$) flows from second air gap spaces (4b) through radial warm gas slots (2b) directed radially outwards;
- wherein cooling gas blower means and cooling gas conducting devices are provided at at least one end, and preferably at both ends, of the machine, which conduct the cooling gas, cooled through heat exchangers, as cold gas to the cold gas chambers and suck the heated cooling gas out of the warm gas chambers,

characterised in that
- within its sub-laminated stacks (2.2) the stator laminated stack (2) is provided with cooling channels (a, b, c, d; a', b', c', d'; h) which are arranged inside the teeth and which communicate with radial cooling gas slots (2a, 2b); and
- the laminations of a sub-stack (T1), arranged closest to the radial cold gas slots (2a), of a respective sub-laminated stack (2.2) are provided with first punched-out slots (12; 12.1) which extend from the yoke zone (8) into the toothed zone (9); and that the laminations of an axially adjoining sub-stack (T2) are provided with second stamped-out slots (13; 13.1) which overlap with the first slots (12; 12.1), at least in the radial direction, and which continue into the toothed zone (9) and communicate at least indirectly with cooling gas outlet slots (d; d') of the tooth tip which lead into the air gap (3).

2. An arrangement as claimed in Claim 1, characterised in that the second stamped-out slots (13) extend into the tip of the tooth and are themselves provided with the cooling gas outlet slots (d, 13a; Fig. 5 and 7).

3. An arrangement as claimed in Claim 1, wherein the second slots lead indirectly into the annular gap, characterised in that laminations of the sub-stack (T1) which are arranged so as to be axially offset relative to the sub-stack (T2) which contains second stamped-out slots (13.1), contain third stamped-out slots (12.2) which at least radially overlap the second slots (13.1) and open into the air gap (3) through cooling gas outlet slots (d; Fig. 11 to 13).

4. An arrangement as claimed in one of Claims 1 to 3, wherein, in the air gap space concerned and in the outlet region of the cooling gas outlet slots, the gas flow includes axial flow components, characterised in that the cooling gas outlet slots (13) are curved or bent from the radial into the axial direction, so that the cooling gas ($f_K$) which flows out of the outlet (13a) of the cooling gas outlet slot (d) flows in the same direction as the gas flow ($f_M$ - Fig. 8) in the air gap space in question.

5. An arrangement as claimed in Claim 4, characterised in that the outlet (13a) of the cooling gas outlet slot (13) widens like a diffuser.

6. An arrangement as claimed in one of Claims 1 to 5, characterised in that the axial region of the warm gas chambers (5) and the rear region of the sub-laminated stacks contain axial overflow channels (14) which, in the region in which they are penetrated by the radial warm gas slots (2b), are sealed off from the latter, and from which overflow channels, radial additional slots (16), distributed over the part length of the sub-laminated stack (2.2), branch off, where the radial additional slots are each arranged, preferably centrally, between two successive, radial warm gas slots (2b), have a smaller slot width ($a_{16}$) than the latter and, in the toothed zone (9) and possibly in the adjoining yoke zone (8), lead into the cooling channels (h, 19) which are arranged inside the teeth.

7. An arrangement as claimed in Claim 6, characterised in that the radial additional slots (16) are provided with their own additional cooling gas outlet slots (18), in such manner that the branched-off amounts of cooling gas ($f_k$) which flow radially inwards through the radial additional slots (16) are divided between two sub-streams: a larger first sub-stream which flows through the cooling channels (h, 19) inside the teeth, initially in the axial direction and then, after an axial-radial deflection, radially outwards through the radial warm gas slots (2b), and a second smaller sub-stream which flows directly into the air gap space (46) concerned through the additional cooling gas outlet slots (18).

8. An arrangement as claimed in Claim 6 or Claim 7, <u>characterised in</u> that the additional slots (16) at the rear of the laminated stack are sealed from the warm gas chamber (5), for example, by spacing bridges (17).

9. An arrangement as claimed in one of Claims 6 to 8, <u>characterised in</u> that in order to relieve the load on the axial overflow channels (14), the first tooth stacks (20) which are arranged in the outer axial zone of the warm gas chambers (5) and which adjoin the axial zone of the cold gas chambers (1) communicate through connecting channels (19a), arranged inside the teeth as a cold gas by-pass, with the axially adjacent, radial cold gas slots (2a; Fig. 9) through which they are directly supplied with cold gas.

10. An arrangement as claimed in one of Claims 1 to 7, <u>characterised in</u> that additional hole punchings (M1) and/or slot punchings (M2) in lamination regions, which are located in the extension of and adjacent to at least one of the first to the third slots (12, 13; 12.1, 13.1, 12.2), serve to reduce or prevent axial balancing streams produced through the last-mentioned slots.

11. An arrangement as claimed in one of Claims 1 to 10, <u>characterised in</u> that the space between the tooth tips within the radial cooling gas slots (2a, 2b) is filled in order to smooth off the air gap.

12. An arrangement as claimed in one of Claims 1 to 9, <u>characterised by</u> the use of air as cooling gas.

13. An arrangement as claimed in Claims 1 to 9, <u>characterised by</u> the use of H$_2$ as cooling gas.

**Revendications**

1. Dispositif de refroidissement indirect par du gaz de l'enroulement statorique et/ou de refroidissement direct par du gaz du paquet de tôles statoriques de machines dynamoélectriques, de préférence pour des turboalternateurs refroidis par du gaz, comprenant
   - un paquet de tôles statoriques (St) sensiblement en forme de cylindre tubulaire ;
   - des barres d'enroulement (St10) de l'enroulement statorique (St1) introduites dans des encoches (N) ménagées sur le pourtour intérieur du paquet de tôles statoriques (2) ;
   - et un rotor (Ro) ayant un enroulement de rotor monté coaxialement à l'intérieur de l'alésage (St2) du paquet de tôles statoriques (2) en en faisant tout le tour et en ménageant un entrefer (3) avec son pourtour intérieur ;
   - des barreaux d'entretoisement (2.1) étant introduits entre des paquets partiels de tôles (2.2) se succédant suivant l'axe du paquet de tôles statoriques (2) avec formation des fentes radiales (2a, 2b) pour le gaz de refroidissementet les fentes radiales mettent les espaces annulaires formant entrefer sur le pourtour intérieur du paquet de tôles statoriques (St) en communication avec des espaces formant chambre (1.5) sur le pourtour extérieur du paquet de tôles statoriques ;
   - ces espaces formant chambre comprenant des chambres pour du gaz froid, à partir desquelles le gaz froid (f$_k$) est refoulé radialement vers l'intérieur par des fentes radiales pour le gaz froid (2a) dans les premiers espaces formant entrefer (4a) correspondants, et des chambres pour du gaz chaud (5), dans lesquelles du gaz de refroidissement (f$_w$) réchauffé et provenant de seconds espaces formant entrefer (4b) pénètrent en se dirigeant radialement vers l'extérieur par des fentes radiales pour le gaz chaud ;
   - des moyens d'insufflation du gaz de refroidissement et des dispositif pour conduire du gaz de refroidissement étant prévus au moins à l'une des extrémités de la machine et, de préférence, aux deux extrémités de la machine, et amènent, à titre de gaz froid, le gaz de refroidissement refroidi dans des échangeurs de chaleur aux chambres pour le gaz froid et aspirent à nouveau le gaz de refroidissement réchauffé des chambres pour le gaz chaud ;
   caractérisé
   - en ce que le paquet de tôles statoriques (2) est muni dans ses paquets partiels de tôle (2.2) de canaux de refroidissement (a, b, c, d ; a', b', c', d' ; h) à denture intérieure, qui communiquent avec des fentes radiales pour le gaz de refroidissement (2a, 2b) ; et
   - en ce que les tôles d'un paquet partiel (T1) du paquet partiel de tôles (2.2), qui est le plus proche des fentes radiales pour le gaz froid (2a), sont munies de premiers trous oblongs (12 ; 12.1) obtenus par poinçonnage et s'étendant de la région pleine (8) jusqu'à la région dentée (9),et en ce que les tôles d'un paquet partiel (T2) venant ensuite axialement sont munies de deuxièmes trous oblongs (13, 13.1) obtenus par poinçonnage, au moins en partie à recouvrement suivant la direction radiale avec les premiers trous oblongs (12 et 12.1) et s'étendant davantage dans la région dentée (9) et également communiquant au monis indirectement avec les fentes pour la sortie du gaz de refroidissement (d ; d') de la tête dentée, qui débouchent dans l'entrefer (3).

2. Dispositif suivant la revendication 1, caractérisé en ce que les deuxièmes trous oblongs (13) obtenus par poinçonnage s'étendent jusqu'à la tête dentée et comportent eux-mêmes les fentes de sortie du gaz de refroidissement (d, 13a, figures 5 et 7).

3. Dispositif suivant la revendication 1, dans lequel les deuxièmes trous oblongs débouchent directement dans l'entrefer, caractérisé en ce que dans des tôles du paquet partiel (T1) qui sont décalées axialement par rapport au paquet partiel (T2) présentent des deuxièmes trous

oblongs (13.1) obtenus par poinçonnage, il est prévu des troisièmes trous oblongs (12.2) obtenus par poinçonnage, qui se recouvrent, au moins radialement, avec les deuxièmes trous oblongs (13.1) et qui débouchent, par des fentes de sortie du gaz de refroidissement (d' ; figures 11 à 13) dans l'entrefer (3).

4. Dispositif suivant l'une des revendications 1 à 3 dans lequel le courant gazeux dans l'espace formant entrefer concerné, dans la région de l'embouchure des fentes de sortie du gaz de refroidissement, présente des composantes axiales d'écoulement, caractérisé en ce que les fentes de sortie du gaz de refroidissement (13) sont courbées ou incurvées de la direction radiale à la direction axiale, de sorte que le gaz de refroidissement $(f_K)$ s'écoulant de l'embouchure (13a) de la fente de sortie du gaz de refroidissement (d) est dirigé dans le même sens que le courant gazeux $(f_M$, figure 8) de l'espace formant entrefer qui est concerné.

5. Dispositif suivant la revendication 4, caractérisé en ce que l'embouchure (13a) de la fente de sortie du gaz de refroidissement (13) s'élargit à la manière d'un diffuseur.

6. Dispositif suivant l'une des revendications 1 à 5, caractérisé en ce que, dans la région axiale des chambres pour le gaz chaud (5), et dans la région postérieure des paquets partiels de tôles, sont disposés des canaux axiaux de trop-plein (14) qui sont rendus étanches vis-à-vis des fentes radiales pour le gaz chaud (2b) dans la région où ils passent à travers ces dernières, et dont partent des fentes radiales supplémentaires (16) réparties sur la longueur partielle du paquet partiel de tôles (2.2), les fentes radiales supplémentaires étant disposées chacune de préférence au milieu, entre deux fentes radiales pour le gaz chaud (2b) successives, présentant une largeur de fente (16) plus petite que celles-ci et débouchant dans la région dentée (9) et, le cas échéant, dans la région pleine (8) adjacente, dans les canaux de refroidissement à denture intérieure (h, 19).

7. Dispositif suivant la revendication 6, caractérisé en ce que les fentes supplémentaires (16) radiales comportent leurs propres fentes supplémentaires de sortie pour le gaz de refroidissement (18) de façon que les quantités de gaz froid dérivées $(f_k)$ s'écoulant radialement vers l'intérieur en passant par les fentes radiales supplémentaires (16), se subdivisent en deux courants partiels : un premier courant plus grand s'écoulant en passant par les canaux de refroidissement à denture intérieure (h, 19) d'abord axialement, puis après une déviation axiale-radiale, radialement vers l'extérieur, par les fentes radiales pour le gaz chaud (2b) et un second courant partiel plus petit pénétrant, en passant par les fentes supplémentaires de sortie pour le gaz de refroidissement (18), directement dans la chambre formant entrefer (46) qui est concernée.

8. Dispositif suivant la revendication 6 ou 7, caractérisé en ce que les fentes supplémentaires (16) sont rendues étanches du côté arrière du paquet de tôles par rapport à la chambre pour le gaz chaud (5), par exemple par des barreaux d'entretoisement (17).

9. Dispositif suivant l'une des revendications 6 à 8, caractérisé en ce que, pour décharger les canaux axiaux de trop-plein (14), les premiers paquets dentés (20) disposés dans la région axiale extérieure des chambres pour le gaz chaud (5) et raccordés à la région axiale des chambres pour le gaz froid (1) communiquent, par des canaux de liaison à denture intérieure (19a) servant de dérivation pour le gaz froid, avec les fentes radiales pour le gaz froid (2a, figure 9) voisines axialement et sont alimentés directement en gaz froid par celles-ci.

10. Dispositif suivant l'une des revendications 1 à 7, caractérisé en ce que des poinçonnages de trous (M1) supplémentaires et/ou des poinçonnages de trous oblongs (M2) sont ménagés dans les régions de tôles qui sont dans le prolongement et qui sont voisines d'au moins l'un des premiers à troisièmes trous oblongs (12, 13 ; 12.1, 13.1, 12.2), pour diminuer ou pour empêcher des écoulements de compensation axiaux provoqués par les trous oblongs mentionnés en dernier.

11. Dispositif suivant l'une des revendications 1 à 10, caractérisé en ce que l'espace entre les têtes dentées qui est prévu à l'intérieur des fentes radiales pour le gaz de refroidissement (2a, 2b) est empli en vue de lisser l'entrefer.

12. Dispositif suivant l'une des revendications 1 à 9, caractérisé par de l'air comme gaz de refroidissement.

13. Dispositif suivant l'une des revendications 1 à 9, caractérisé par du $H_2$ comme gaz de refroidissement.

FIG 1

0 155 405

FIG 2

FIG 3

FIG 4

FIG 5

FIG 6

FIG 8

FIG 7

FIG 9

0 155 405

FIG 10

11

0 155 405

FIG 11

FIG 12

FIG 13

13

FIG 14